**Europäisches Patentamt**

**European Patent Office**

**Office européen des brevets**

(11) Veröffentlichungsnummer: **0 029 219**
A2

# EUROPÄISCHE PATENTANMELDUNG

(21) Anmeldenummer: **80106996.4**

(22) Anmeldetag: **13.11.80**

(51) Int. Cl.³: **F 24 D 11/02**, F 24 H 1/18

(30) Priorität: **20.11.79 DE 2946698**

(43) Veröffentlichungstag der Anmeldung: **27.05.81**
**Patentblatt 81/21**

(84) Benannte Vertragsstaaten: **AT BE CH FR GB IT LI LU NL SE**

(71) Anmelder: **Müller, Paul, Elsässerstrasse 6,**
**D-4400 Münster (DE)**
Anmelder: **Wolke, Erdhard, Saarbrückerstrasse 36,**
**D-4400 Münster (DE)**

(72) Erfinder: **Müller, Paul, Elsässerstrasse 6,**
**D-4400 Münster (DE)**
Erfinder: **Wolke, Erdhard, Saarbrückerstrasse 36,**
**D-4400 Münster (DE)**

(74) Vertreter: **Schulze Horn, Stefan, Dipl.-Ing. et al,**
**Patentanwälte Dipl.-Ing. S. Schulze Horn M.SC. Dr. H.**
**Hoffmeister Goldstrasse 36, D-4400 Münster (DE)**

(54) Einrichtung zur Erzeugung von Heisswasser mittels einer Wärmepumpe und Verfahren zum Betreiben dieser Einrichtung.

(57) Einrichtung zur Erzeugung von Heisswasser mittels einer Wärmepumpe, die einen Verdampfer zur Entnahme von Energie aus einem diesen durchströmenden gasförmigen Medium, einen als Wärmetauscher für Heisswasser ausgebildeten Kondensator und einen Kompressor oder eine Pumpe zur Umwälzung des Kältemittels aufweist, mit einem öl- oder gasgefeuerten Heizkessel (1) als Teil der Einrichtung, wobei der Verdampfer (3) im Rauchgasabzug (2) des Heizkessels (1), strömungsmässig hinter dem Verdampfer (3) ein Saugventilator (4) und strömungsmässig vor dem Verdampfer (3) eine steuerbare Zuluftklappe (5) zur Einleitung von Aussenluft in den Rauchgasabzug (2) angeordnet ist.

Die Erfindung bezieht sich ausserdem auf ein Verfahren zum Betreiben der genannten Einrichtung. Hierbei wird entweder nur Aussenluft, ein Gemisch von Rauchgas und Aussenluft oder nur Rauchgas durch den Verdampfer (3) gesaugt. Die Temperatur eines zur Einrichtung gehörenden Heisswasserspeichers wird laufend überwacht. Bei Unterschreiten einer bestimmten Temperatur wird die Wärmepumpe in Betrieb genommen, wobei der Verdampfer von Aussenluft durchflossen wird, wenn die Temperatur der Aussenluft einen bestimmten Wert nicht unterschreitet. Bei Unterschreiten der eingestellten Aussenlufttemperatur oder bei ausbleibendem oder ungenügendem Temperaturanstieg in dem oder den Heisswasserspeicher(n) wird der Heizkessel eingeschaltet und der Zustrom der Aussenluft ganz oder teilweise unterbrochen.

BEZEICHNUNG
siehe Titelseite

Die Erfindung betrifft eine Einrichtung zur Erzeugung von Heißwasser mittels einer Wärmepumpe, die einen Verdampfer zur Entnahme von Energie aus einem diesen durchströmenden gasförmigen Medium, einen als Wärmetauscher für Heißwasser ausgebildeten Kondensator und einen Kompressor oder eine Pumpe zur Umwälzung des Kältemittels aufweist sowie ein Verfahren zum Betreiben dieser Einrichtung.

Es sind bereits Wärmepumpen-Einrichtungen zur Beheizung von insbesondere Gebäuden bekannt, bei denen ein Wasserstrom dem Grundwasser entnommen und wieder in dieses nach Herabsetzen der Temperatur eingespeist wird. Nachteilig ist bei diesen Systemen aber, daß sie einmal von einem Medium mit einer relativ geringen Temperatur ausgehen und daß weiterhin bei großen Anforderungen an die Wärmeleistung der Heizung diese nicht erfüllt werden können, also noch ein zusätzlicher Öl- oder gasbeheizter Heizkessel notwendig ist.

Es ist weiterhin bereits bekannt, zur Gebäudebeheizung Wärmepumpen in Verbindung mit Solarzellen oder -kollektoren einzusetzen. Nachteilig ist hierbei nicht nur der hohe Aufwand für die Solarzellen oder -kollektoren, sondern das insbesondere zu Zeiten der geringsten Sonneneinstrahlung oft die höchste Heizleistung erforderlich ist, also auch hier zusätzlich ein Öl- oder gasgefeuerter Heizkessel erforderlich ist.

Bei den bekannten Systemen ist nachteilig eine Koppelung zwischen dem ohnehin erforderlichen Heizkessel mit dem Wärmepumpensystem nicht vorhanden, obwohl beides unter bestimmten Voraussetzungen bereits parallel vorhanden ist. Es ist jetzt Aufgabe der Erfindung, eine Einrichtung zu schaffen, bei welcher der Wirkungsgrad und Energieverbrauch der Wärmepumpe entscheidend verringert werden kann, bei welcher die günstigste Wärmeerzeugung je nach Betriebszustand des Hauptsystems möglich ist und welche besonders wirtschaftlich und bei geringem Raumbedarf auch in vorhandene Heizungsräume installierbar ist.

Die Einrichtung gemäß der Erfindung soll weiterhin betriebsstörungssicher arbeiten können und dient insbesondere dazu, den Energieverbrauch zum Beheizen von Gebäuden und zur Bereitstellung von Brauchwasser auf ein Minimum herabzusetzen.

Diese Aufgabe wird erfindungsgemäß bei der eingangs genannten Einrichtung dadurch gelöst, daß die Einrichtung einen Öl- oder gasgefeuerten Heizkessel aufweist, der Verdampfer im Rauchgasabzug des Heizkessels und strömungsmäßig hinter dem Verdampfer ein Saugventilator angeordnet ist und strömungsmäßig vor dem Verdampfer eine gesteuerte öffen- und schließbare Zuluftklappe zur Einleitung von Außenluft in den Rauchgasabzug vorhanden ist.

Zur Vergrößerung der Flexibilität in der Heizwassererzeugung, insbesondere hinsichtlich der Heizungs- und Brauchwassererzeugung weist die erfindungsgemäße Einrichtung vorteilhaft einen zweiten Heizkreis mit einem weiteren Wärmeaustauscher bzw. einem zweiten Heißwasserspeicher auf und um eine besonders raumsparende Konstruktion zu erhalten, ist weiterhin vorteilhaft der Kondensator des Wärmepumpenkreises als Koaxial-Wärmeaustauscher ausgebildet.

Vorteilhaft wird die erfindungsgemäße Einrichtung derart betrieben, daß in Abhängigkeit von der durch die Wärmepumpe abzugebenden Wärme bzw. von der Wassertemperatur in dem oder den Speicher(n) nur Außenluft, ein Gemisch von Rauchgas und Außenluft oder nur Rauchgas durch den Verdampfer gesaugt wird, wobei im einzelnen die Auslegung derart sein kann, daß die Temperatur in dem oder den Speicher(n) laufend überwacht wird und bei Unterschreiten einer bestimmten Temperatur die Wärmepumpe in Betrieb genommen wird, wobei der Verdampfer von Außenluft durchflossen wird, wenn die Temperatur der Außenluft einen bestimmten Wert nicht unterschreitet und daß entweder bei Unterschreiten der eingestellten Außenlufttemperatur oder bei ausbleibenden oder ungenügenden Temperaturanstieg in dem oder den Heißwasserspeicher(n) der Heizkessel eingeschaltet wird und der Zustrom der Außenluft ganz oder teilweise unterbrochen wird.

Bei der vorliegenden Erfindung wird erstmals sichergestellt, daß die beiden nebeneinander existierenden Heizwasserquellen, nämlich die Wärmepumpe und ein Heizkessel jeweils in dem Bereich arbeiten, der für sie am günstigsten ist. Die Wärmepumpe arbeitet in einem Bereich mit geringen Heißwasseranforderungen, so daß der dann unterhalb des günstigsten Wirkungsgrades laufende Heizkessel, z. B. in den Sommermonaten überhaupt nicht genutzt zu werden braucht. Für geringe Außenlufttemperaturen und bei hohen Anforderungen von Wärmeenergie wird dann der Heizkessel zugeschaltet, wobei durch die Wärmepumpe und die dadurch erfolgende Abkühlung des Rauchgases bis auf praktisch normale Temperatur sichergestellt wird, daß die verwendete Primärenergie praktisch vollständig ausgenutzt wird. Das erfindungsgemäße System vermag also die Wärmebilanz zur Beheizung von Gebäuden und zur Herstellung von Brauchwasser wesentlich zu verbessern und angesichts der Einfachheit aller Komponenten kann von einer idealen Lösung der anstehenden Probleme gesprochen werden.

Im folgenden wird ein Ausführungsbeispiel der Erfindung anhand von Zeichnungen näher erläutert. Es zeigen:

Figur 1    schematisch eine Einrichtung gemäß der Erfindung im Sommerbetrieb,

Figur 2    die Einrichtung gemäß Figur 1 im Winterbetrieb,

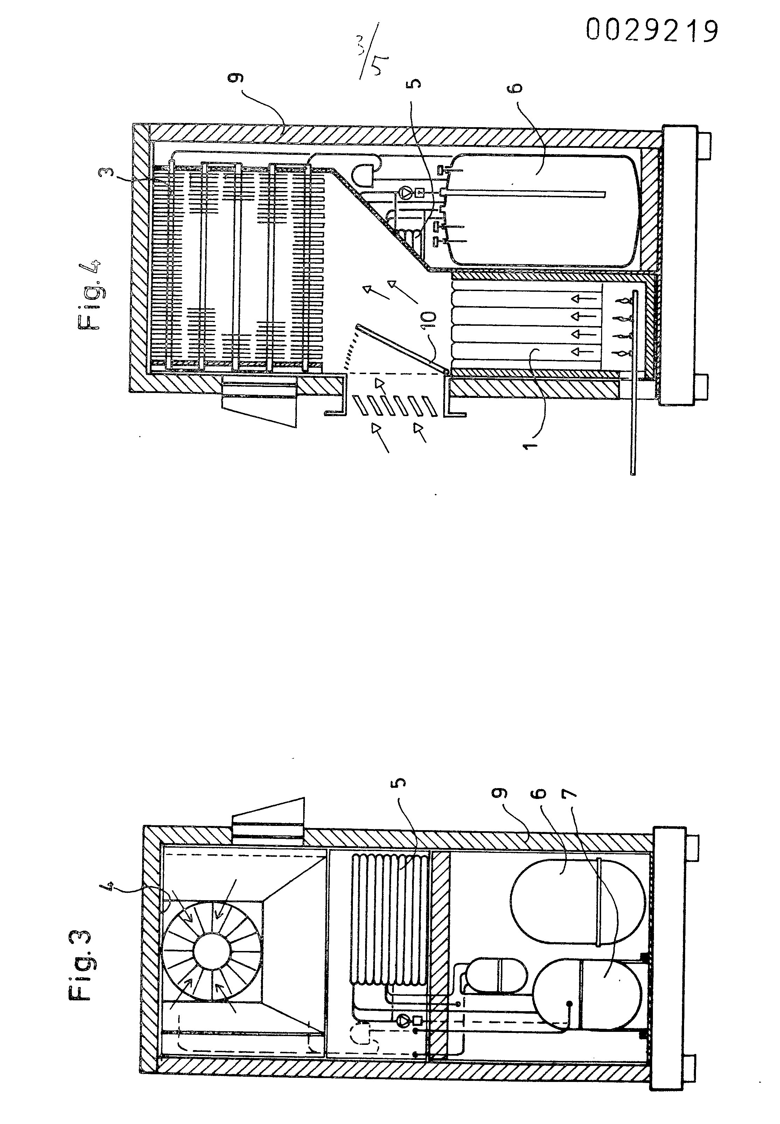

Figur 3    einen schematischen Vertikalschnitt durch die zu einer Einbaueinheit zusammengefaßte Einrichtung gemäß der Erfindung,

Figur 4    einen weiteren Vertikalschnitt,

Figur 5    einen Horizontalschnitt im Bereich des Abluftkanals und Saugventilators,

Figur 6    einen Vertikalschnitt durch die erfindungsgemäße Einrichtung mit integriertem Heizkessel und

Figur 7 einen Vertikalschnitt durch den Speicher des zweiten Heizkreises mit darüber angeordnetem Brauchwassererzeuger.

Gemäß den Figuren besteht die erfindungsgemäße Einrichtung aus einem Heizkessel 1, der als gasgefeuerter Heizkessel dargestellt ist, aber auch öl- oder koksgefeuert sein kann. An den Heizkessel 1 ist ein Rauchgasabzug 2 angeschlossen, in welchem ein Verdampfer 3 einer Wärmepumpenanlage eingesetzt ist. In dem Rauchgasabzug 2 ist betrieblich zwischen dem Heizkessel 1 und dem Verdampfer 3 eine Zuluftklappe 10 angeordnet, durch welche gesteuert Außenluft in das Rauchgas eingeführt werden kann.

Betrieblich hinter dem Verdampfer 3 ist ein Saugventilator 4 angeordnet, der für den Rauchgasabzug, das Ansaugen der Außenluft und das Ausblasen der Außenluft bzw. des Rauchgases oder des Außenluft-Rauchgas-Gemisches zuständig ist. Da in dem Verdampfer die Rauchgase entscheidend abgekühlt werden und hinter dem Verdampfer nur noch mit praktisch Normaltemperatur austreten, ist der Betrieb des Ventilators, welcher ein Axial- oder Radialgebläse sein kann, nicht mehr durch erhöhte Rauchgastemperatur behindert. Der Verdampfer 3 besteht aus nicht korrodierenden Materialien, z.B. aus Kupfer, um einer evtl. Säurebildung in diesem Bereich, z.B. durch Kondensat in Verbindung mit Schwefelkohlenoxidverbindungen geschützt zu sein.

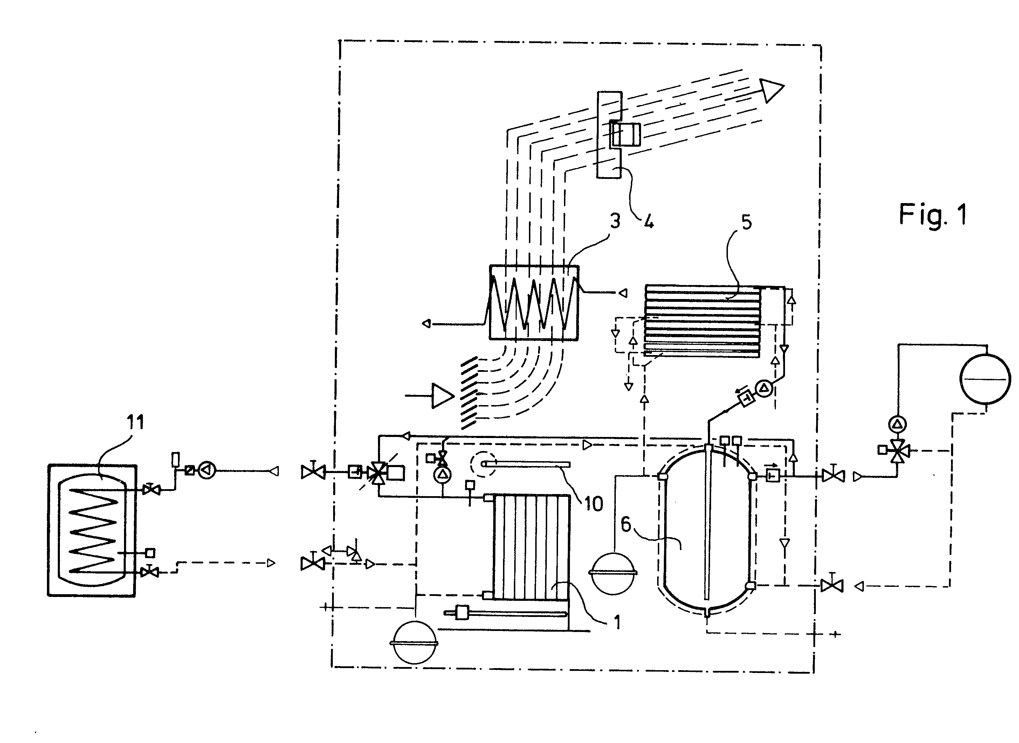

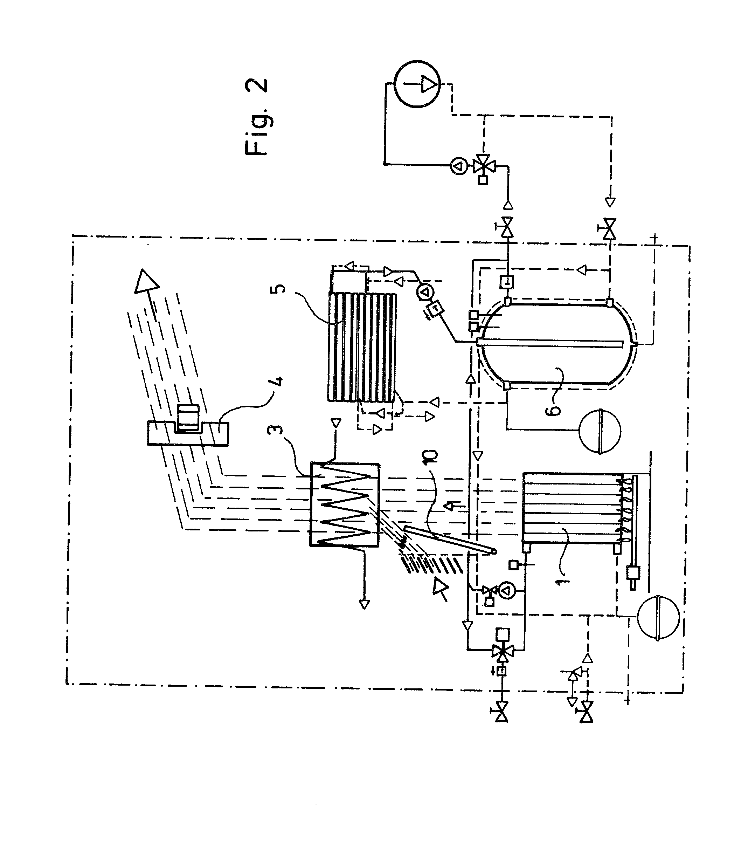

Die Zuluftklappe 10 ist über einen Stellmotor und eine Steuerungsschaltung je nach Bedarf einstellbar, so daß einmal gemäß Figur 1 ausschließlich Außenluft durch den Verdampfer strömt, gemäß Figur 2 ein Gemisch von Rauchgas und Außenluft durch den Verdampfer 3 gesaugt wird, aber auch nach Schliessen der Zuluftklappe 10 die Durchströmung des Verdampfers 3 nur durch Rauchgas möglich ist.

Der Verdampfer ist betrieblich in bekannter Weise an einen Kondensator bzw. Koaxial-Wärmeaustauscher 5 angeschlossen, welcher betrieblich einseitig durch das zu erwärmende Heißwasser durchströmt wird, welches in einen oder zwei Heißwasserspeicher 6 bzw. 7 geleitet wird. Aus diesem Speicher bzw. diesen Speichern kann das Heißwasser nach Bedarf unter Einsatz von Naturumlauf oder von Umwälzpumpen in bekannter Weise entnommen werden.

Der Kreislauf der Wärmepumpenanlage wird vervollständigt durch einen nicht gezeigten Kompressor bzw. eine Pumpe zur Umwälzung des Kältemittels, da der Verdampfer, der Kondensator sowie der Rest des Wärmepumpenkreislaufs und auch die Heißwasserspeicher herkömmliche und bekannte Bauelemente darstellen, kann eine detaillierte Beschreibung dieser Elemente entfallen. Ihre Auslegung erfolgt vorteilhaft entsprechend handelsüblicher Spezifikationen und steht im Belieben des Fachmannes.

Die einzelnen, vorstehend beschriebenen Elemente sind von Schall- und wärmedämmenden Wandelementen umgeben und bilden eine für sich transportable Einheit, die bei geringen Grundmaßen von z. B. 850 x 850 x 1750 mm bequem in Kellerräumen, z. B. direkt neben Heizkesseln aufgestellt werden kann.

In dem Heißwasserspeicher 6 bzw. dem weiteren für die Brauchwasserversorgung dienenden Heißwasserspeicher 7 sind jeweils Temperaturfühler angebracht, welche bei Unterschreiten einer vorherbestimmten Temperatur die Wärmepumpe in Betrieb setzen. Dabei wird sie solange nur Außenluft ansaugen und den Betrieb des Heizkessels 1 überflüssig machen, wie die aus der angesaugten Außenluft aufgenommene Energie zur gewünschten Erhöhung oder Beibehaltung des Temperaturniveaus in den Speichern 6 und 7 ausreicht.

Falls die Außentemperatur aber, z.B. im Winter dafür zu gering ist bzw. zu Heizzwecken die Abgabe von Heißwasser aus den Speichern 6 und 7 zu hoch wird, schaltet sich der Heizkessel 1 ein und die Zuluftklappe 10 wird z.B. teilweise geschlossen. Es entsteht dann eine bereits etwas abgekühlte Mischung aus Rauchgas und Außenluft, die aber aufgrund ihres hohen Luftvolumens mit erheblicher Geschwindigkeit durch den Verdampfer 3 strömt und aufgrund dieser hohen Strömungsgeschwindigkeiten eine gute Wärmeleitung und damit Energieabgabe ermöglicht. Diese Mischung erscheint besonders vorteilhaft bei geringen Leistungen des Heizkessels, während bei hohen Energieanforderungen der Heizkessel voll arbeitet, Außenluft nicht mehr zugeführt wird und jetzt allein das Rauchgas innerhalb des Verdampfers auf nahezu normale Temperatur herabgekühlt wird. Durch den Entzug der Restenergie aus dem Rauchgas wird dabei gewährleistet, daß die eingesetzte Primärenergie vollständig zu benutzbarer Wärmeenergie umgewandelt wird, wobei die Energieaufnahme durch die Wärmepumpe selbst sehr gering ist, da die aufgenommene Energie auf seh hohem Niveau ist. In diesem Arbeitsbereich kann die Wärmepumpe wie eine Nachkühlung arbeiten, wobei durch den Wärmepumpenkreislauf eine besonders günstige und damit wirkungsvolle Wärmeübertragung in dem Verdampfer eingestellt wird.

Die Schaltung der erfindungsgemäßen Einrichtung ermöglicht weiterhin eine besondere Flexibilität, da hier nicht nur die Temperatur der Außenluft als Regelgröße berücksichtigt werden kann, sondern je nach Anforderung das in dem Heizkessel erwärmte Wasser in den Haupt- oder den Nebenheißwasserspeicher 6 bzw. 7 geleitet wird. Bis zu bestimmten Betriebszuständen kann also z. B. das Brauchwasser aus dem Haupteißwasserspeicher 6 entnommen werden, danach aber direkt aus dem Heizkessel. Beides gilt auch für die Entnahme von Wasser zu Heizungszwecken, wobei dieses bei geringeren Anforderungen aus dem Speicher 6 und bei höheren Anforderungen sowohl aus dem Heizkessel 1 als auch dem durch die Wärmepumpe gespeißten Speicher entnommen werden kann. Selbstverständlich ist mit der Steuerung auch die Einstellung der Zuluftklappe 10 vorzunehmen, da diese den Anforderungen gemäß eingestellt wird. Insbesondere diese genannte Flexibilität der erfindungsgemäßen Einrichtung erlaubt es, einen optimalen Wirkungsgrad im Betrieb einzustellen.

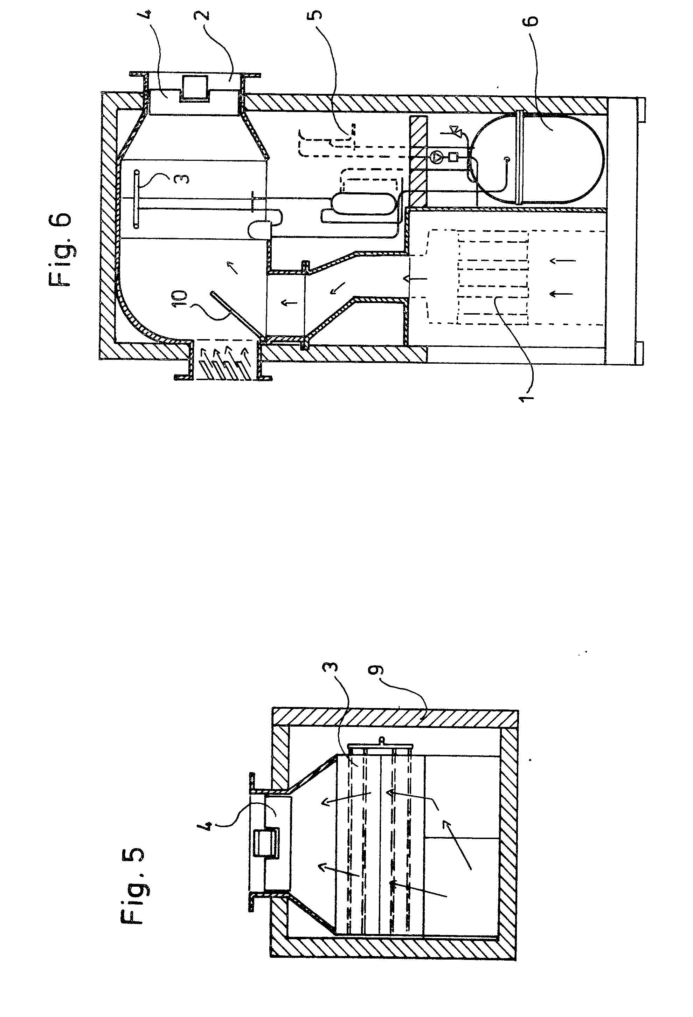

Gemäß Figur 6 kann in den die Wärmepumpe und die Heißwasserspeicher haltenden Block auch ein Heizkessel integriert sein, der gemäß Figur 6 als Gasbrenner gezeichnet ist. Dieser Block eignet sich besonders zum Einsatz, wenn ein herkömmlicher Heizkessel noch nicht vorhanden ist oder sich für den erfindungsgemäßen Einsatz nicht eignet. Bei diesem Block ist es besonders vorteilhaft, daß bei Gasbeheizung keine schädlichen Emissionen auftreten und aufgrund der Herabkühlung der Rauchgase in dem Verdampfer die Austrittstemperatur der Rauchgase so gering ist, daß diese durch eine Öffnung ins Freie abgeleitet werden können. Es entfällt

0029219

also z. B. bei Neubauten unter Umständen die aufwendige Errichtung von Schornsteinen. Bei Öl- oder Koksbefeuerung des integrierten Heizkessels erscheint allerdings der Anschluß an einen Schornstein günstiger zu sein. Der beschriebene Block ist für sich transportabel und handelsfähig und bietet den großen Vorteil, daß eine Facharbeiter erfordernde Montage nicht mehr auf der Baustelle durchgeführt werden muß, wodurch Zeit eingespart werden kann und Termine gehalten werden können.

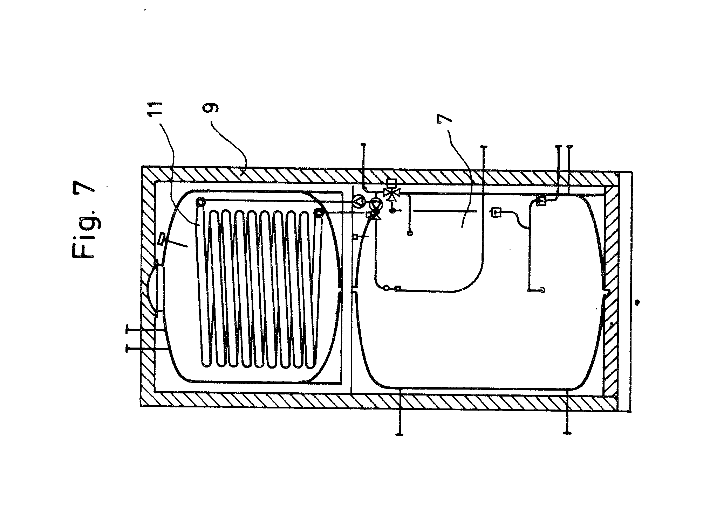

In einer weiteren Ausgestaltung der Erfindung gemäß Figur 7 kann der erfindungsgemäße Block auch noch einen zusätzlichen Boiler oder Brauchwassererzeuger 11 aufweisen, in welchem das Wasser über eine Heizwendel erwärmt wird, welche von dem Heißwasser aus dem zweiten Heißwasserspeicher 7 durchflossen wird. Dadurch ist es möglich, eine größere Pufferwirkung zu erzielen und während längerer Zeiträume genügend Brauchwasser zu produzieren, ohne daß die erfindungsgemäße Einrichtung zur Heißwassererzeugung ihren Betrieb aufnehmen muß. Es ist dadurch insbesondere möglich, die Brauchwassererzeugung oder die Heißwassererzeugung für andere Zwecke auf den günstigsten Tagesbereich zu verlegen, z. B. wenn die Außenluft die höchste Temperatur besitzt oder die übrigen Anforderungen an Heißwasser eine günstigste Erzeugung zulassen, wenn also z. B. der reine Betrieb als Wärmepumpe möglich ist oder wenn der Heizkessel ohnehin voll in Betrieb ist.

Die Verwendung eines Gasbrenners ist in diesem Zusammenhang besonders günstig, da der Heizkessel dann als atmosphärischer Gasbrenner ausgeführt werden kann, bei dem also kein Gebläse zur Zuführung der Verbrennungsluft erforderlich ist und bei dem je nach Wärmebedarf die Anzahl der Gasflammen gesteuert wird. Eine ausreichende Frischluftzufuhr ist ohnehin durch die Wirkung des Saugventilators bei geschlossener oder nur teilweise geöffneter Zuluftklappe einstellbar.

Es ist besonders günstig, daß bei dem Erfindungsgegenstand eine optimale Umschaltung zwischen Primärenergie und elektrischer Energie für die Wärmepumpe eingestellt werden kann, wozu der in dem Block vorhandene Regelkreis entsprechend aus-zulegen ist.

A 1

Patentansprüche:

1. Einrichtung zur Erzeugung von Heißwasser mittels einer Wärmepumpe, die einen Verdampfer zur Entnahme von Energie aus einem diesen durchströmenden gasförmigen Medium, einen als Wärmetauscher für Heißwasser ausgebildeten Kondensator und einen Kompressor oder eine Pumpe zur Umwälzung des Kältemittels aufweist, dadurch gekennzeichnet, daß die Einrichtung einen Öl- oder gasgefeuerten Heizkessel (1) aufweist, der Verdampfer (3) im Rauchgasabzug (2) des Heizkessels (1) und strömungsmäßig hinter dem Verdampfer (3) ein Saugventilator (4) angeordnet ist und strömungsmäßig vor dem Verdampfer (3) eine gesteuert öffen- und schließbare Zuluftklappe (5) zur Einleitung von Außenluft in den Rauchgasabzug (2) vorhanden ist.

2. Einrichtung nach Anspruch 1, gekennzeichnet durch einen zweiten Heizkreis mit einem weiteren Wärmeaustauscher bzw. einem zweiten Heißwasserspeicher (7).

3. Einrichtung nach Anspruch 1 oder 2, dadurch gekennzeichnet, daß der Kondensator (5) als Koaxial-Wärmetauscher ausgebildet ist.

4. Verfahren zum Betreiben der Einrichtung gemäß Anspruch 1 bis 3, dadurch gekennzeichnet, daß in Abhängigkeit von der durch die Wärmepumpe abzugebenden Wärme bzw. von der Wassertemperatur in dem oder den Speicher(n) (6, 7) nur Außenluft, ein Gemisch von Rauchgas und Außenluft oder nur Rauchgas durch den Verdampfer (3) gesaugt wird.

5. Verfahren nach Anspruch 4, dadurch gekennzeichnet, daß die Temperatur in dem oder den Speicher(n) laufend überwacht wird und bei Unterschreiten einer bestimmten Temperatur die Wärmepumpe in Betrieb genommen wird, wobei der Verdampfer von Außenluft durchflossen wird, wenn die Temperatur der Außenluft einen bestimmten Wert nicht unterschreitet und daß entweder bei Unterschreiten der eingestellten Außenlufttemperatur oder bei ausbleibenden oder ungenügenden Temperaturanstieg in dem oder den Heißwasserspeicher(n) der Heizkessel eingeschaltet wird und der Zustrom der Außenluft ganz oder teilweise unterbrochen wird.

6. Einrichtung nach Anspruch 1 bis 3, dadurch gekennzeichnet, daß der oder die Heißwasserspeicher (6, 7), der Heizkessel (1), der Verdampfer (3), der Saugventilator (4), der Kondensator (5) zu einer Einheit zusammengefaßt sind, die transportabel und von den schall- und wärmedämmenden Wandelementen (9) umgeben ist und wobei der Auslassflansch für das Rauchgas und/oder die den Kondensator durchströmende Luft entweder an einen Schornstein oder an eine nach außen führende Öffnung anschließbar ist.

7. Einrichtung nach Anspruch 1 bis 3 sowie 6, dadurch gekennzeichnet, daß oberhalb des Heißwasserspeichers (7) ein Heißwassererzeuger angeordnet ist, in welchem eine Heizschlange vorliegt, durch die Wasser aus dem Heißwasserspeicher (7) zirkuliert und wobei das Brauchwasser aus dem Erzeuger (11) oben entnommen wird.

Fig.1

Fig. 2

3/5

Fig.4

Fig.3

Fig. 5

Fig. 6

4/5

0029219

Fig. 7